Europäisches Patentamt

European Patent Office

Office européen des brevets

(11) Veröffentlichungsnummer : **0 441 739 A1**

# (12) EUROPÄISCHE PATENTANMELDUNG

(21) Anmeldenummer : **91810035.5**

(22) Anmeldetag : **16.01.91**

(51) Int. Cl.$^5$ : **C22B 1/00, C22B 21/00, C25C 3/08, C25C 3/12**

(30) Priorität : 08.02.90 CH 407/90

(43) Veröffentlichungstag der Anmeldung :
14.08.91 Patentblatt 91/33

(84) Benannte Vertragsstaaten :
AT BE CH DE DK ES FR GB GR IT LI LU NL SE

(71) Anmelder : **ALUSUISSE-LONZA SERVICES AG**
**Feldeggstrasse 4**
**CH-8034 Zürich (CH)**

(72) Erfinder : **Meyer, Klaus**
**Kamorstrasse 12**
**CH-8200 Schaffhausen (CH)**

(54) **Verfahren zur Aufbereitung von aus mit einer Oberflächenbeschichtung versehenen Metallteilen bestehenden Abfällen durch Zerkleinerung.**

(57)    Bekannte Verfahren zur Aufbereitung von aus mit einer Oberflächenbeschichtung versehenen Metallteilen bestehenden Abfällen durch Zerkleinerung haben den Nachteil, dass sie sehr aufwendig sind und/oder nur die Wiederverwendung einer Komponente des Abfalls zulassen.

Diese Nachteile können vermieden werden, wenn die zerkleinerten Teile einer in der elektrochemischen Industrie verwendeten kohlenstoffhaltigen Masse, insbesondere einer Söderbergmasse oder einer kohlenstoffhaltigen Masse zur Herstellung von Kathoden- oder Anodenblöcken für die Erzeugung von Aluminium nach dem Hall-Heroult-Frozess, zugeführt werden.

EP 0 441 739 A1

# VERFAHREN ZUR AUFBEREITUNG VON AUS MIT EINER OBERFLÄCHENBESCHICHTUNG VERSEHENEN METALLTEILEN BESTEHENDEN ABFÄLLEN DURCH ZERKLEINERUNG

Die Erfindung betrifft ein Verfahren zur Aufbereitung von aus mit einer Oberflächenbeschichtung versehenen Metallteilen bestehenden Abfällen durch Zerkleinerung.

Ein derartiges Verfahren ist aus der EP-A-125 435 bekannt, wobei dieses Verfahren derart arbeitet, dass die aufzubereitenden Metallteile einem Grobzerkleinerer zugeführt und auf eine Korngrösse von 1 mm bis 20 mm zerkleinert werden, diese Grobfraktion einer Feinzerkleinerung zugeführt wird, auf der die Grobfraktion auf eine Korngrösse von etwa 300 μm zerkleinert wird, anschliessend das Feststoffgemisch aus Metallfraktion und Nichtmetallfraktion in Sichtern in die Metallfraktion und die Nichtmetallfraktion getrennt wird, die Nichtmetallfraktion agglomeriert und die Metallfraktion zur Weiterverarbeitung abgeführt wird.

Bei der Produktion und Verarbeitung von insbesondere Metall-Kunststoff-Verbundfolien fallen grosse Mengen von Abfällen an, z.B. Besäumungsstreifen, Stanzreste oder Fehlchargen. Durch das zunehmende Umweltbewusstsein der Verbraucher ist zu erwarten, dass vermehrt gebrauchte Metall-Kunststoff-Verbundfolien gesammelt und dem Hersteller zurückgegeben werden. Bisher werden derartige Abfälle meist auf Sonderdeponien gelagert oder Müllverbrennungsanlagen zugeführt.

Die Metall-Kunststoff-Verbundfolien enthalten jedoch wertvolle Rohstoffe, die es gilt wieder zu verwerten. Diesbezüglich sind die Industrieabfälle von besonderem Interesse, da sie meist frei von Verunreinigungen sind und sortenrein gesammelt werden können.

Die bekannten Vorschläge zur Wiederverwertung von aus mit einer Oberflächenbeschichtung versehenen Metallteilen bestehenden Abfällen lassen sich einteilen in solche, bei denen eine Trennung in Metall- und Beschichtungsanteil nicht vorgenommen wird -- z.B. werden nach der DE-OS 31 10 054 Metall-Kunststoff-Verbundfolienabfälle in granulierter Form weiterverarbeitet --, und in solche, bei denen im wesentlichen nur eine Komponente des Abfallmaterials, meist die metallische, zurückgewonnen wird -- z.B. nach JP 53 004 079 durch Wärmebehandlung der Metall-Kunststoff-Verbundfolie bei Temperaturen im Bereich der Zersetzung des Kunststoffs --.

Alle derartigen Vorschläge, einschliesslich des eingangs genannten Verfahrens, sind sehr aufwendig und/oder lassen nur die Wiederverwendung einer Komponente des Abfalls zu.

Der Erfinder hat sich daher die Aufgabe gestellt, ein Verfahren der eingangs erwähnten Art zu schaffen, welches die vorerwähnten Nachteile nicht aufweist.

Erfindungsgemäss wird die gestellte Aufgabe durch ein Verfahren gelöst, welches sich nach dem Wortlaut des Anspruchs 1 auszeichnet. Vorteilhafte Weiterbildungen des erfindungsgemässen Verfahrens sind durch die Merkmale der Ansprüche 2 bis 12 gekennzeichnet.

Da für die Durchführung des erfindungsgemässen Verfahrens ausser einem eventuellen notwendigen Zerkleinerungsaggregat keine zusätzlichen Vorrichtungen benötigt werden, ist es praktisch ohne zusätzlichen finanziellen Aufwand durchführbar. Desweiteren zeichnet es sich dadurch aus, dass sowohl der Metallanteil als auch der die Oberflächenbeschichtung bildende Anteil, insbesondere bei Verwendung von Papier- oder Kunststoff-Aluminium-Verbundmaterial für eine Masse zur Herstellung von Aluminium nach dem Söderbergprozess oder zur Herstellung von Kathoden- oder Anodenblöcken zur Herstellung von Aluminium nach dem Hall-Heroult Prozess, einer Wiederverwertung zugeführt wird, indem beispielsweise das Aluminium bei den eben genannten Verwendungsarten als Metall verbleibt oder sich mit dem während der Elektrolyse der Tonerde gebildeten Sauerstoff zu Aluminiumoxid umsetzt und damit in vorteilhafter Weise geringfügig den Anodenabbrand einschränkt und die kohlenstoffhaltigen Oberflächenbeschichtungsprodukte während der Anodenherstellung pyrolisiert bzw. verkokt werden und damit den Koksverbrauch reduzieren.

Zur Erläuterung des erfindungsgemässen Verfahrens werden nachfolgend Versuchsergebnisse in Tabellenform zusammengefasst, die von unter Produktionsbedingungen hergestellten erfindungsgemässen Anoden für die Erzeugung von Aluminium nach den Hall-Heroult-Prozess resultieren, und die weitere Vorteile des erfindungsgemässen Verfahrens erkennen lassen.

Beispiele

Als aus mit einer Oberflächenbeschichtung versehenen Metallteilen bestehenden Abfälle wurde ein flächeförmiges Kunststoff-Aluminium-Kunststoff-Verbundmaterial, so genanntes Tubenlaminat, und flächenförmiges Aluminium-Papier-Verbundmaterial verwendet, welch beides bei der Herstellung der Verbunde als Besäumungsabschnitte anfiel. Das zu 1 bis 5 mm zerkleinerte Kunststoff-Aluminium-Kunststoff-Verbundmaterial war in Mengen von 0,01 ; 2 ;4 ; und 6 Gew.% zu produktionsüblichen kohlenstoffhaltigen Massen zur Herstellung von Anoden für die Erzeugung von Aluminium nach dem Hall-Heroult-Prozess beigefügt. Unter Produktionsbedingungen wurden je 8 Anoden hergestellt. Die Schnitzeldosierung erfolgte direkt in den ersten Kokneter. Die Schnitzel konnten mit einer Gericke-Schraube ohne Probleme zudosiert werden. Die so hergestellten 32 Anoden wurden im normalen Ablauf gebrannt, danach wurden je der Anode zwei Prüfkörper entnommen und in üblicher Weise untersucht, wie dies regelmässig zur Ueberprüfung der normalen Anodenproduktion erfolgt.

In analoger Weise wurde Aluminium-Papier-Verbundmaterial in maximalen Schnitzellängen von 5 bis 15 mm zu 2 und 4 Gew.% den gleichen Massen beigefügt.

Die für die Charakterisierung von Anodenkörpern wichtigen Kenngrössen wie elektrischer Widerstand, $CO_2$-Reaktivitätsrest, Staubanteil beim $CO_2$-Reaktivitätstest, Dichte und Biegefestigkeit sind den Tabellen 1 und 2 zu entnehmen, wobei sich die Tabelle 1 auf das Kunststoff-Aluminium-Kunststoff-Verbundmaterial und die Tabelle 2 auf das Aluminium-Papier-Verbundmaterial bezieht.

Bei Versuchen mit 10 Gew.% Aluminium-Kunststoff-Verbund-material als Abfallzusatz wurde ein sehr hoher elektrischer Widerstand festgestellt. Dagegen bleibt dieser gemäss Tabelle 1 bis zu 4 Gew.% Abfallstoff im Bereich von Werten, die von aus keine Abfallstoffe enthaltenden Massen hergestellten Anoden bekannt sind.

Ueberraschenderweise liegen bei den nach dem erfindungsgemässen Verfahren hergestellten Anoden die Rest-$CO_2$-Reaktivitätswerte höher als bei Anoden, die ohne Abfallstoffe hergestellt wurden. Das bedeutet, dass die Schnitzel als Inhibitor wirken und die Anoden in Bezug auf die $CO_2$-Reaktivität besser sind. Noch überraschender ist, dass im Vergleich mit Anoden ohne Abfallstoffe der Staubanteil beim $CO_2$-Reaktivitätstest einen vorteilhaft tieferen Wert erreicht und sogar auf unter 1 Gew.% gebracht werden kann.

Die Dichte sinkt mit steigendem Schnitzelzusatz, bleibt aber zumindest bei einem Zusatz bis zu 2 Gew.% im Rahmen tolerierbarer Werte. Die Probekörper verhalten sich bezüglich Druckfestigkeit sehr unterschiedlich. Die Druckfestigkeiten erreichen aber zumindest bei geringen Abfallzusätzen Werte, die von Anoden, die aus kohlenstoffhaltigen Massen ohne Abfallstoffe hergestellt sind, bekannt sind.

Weitere Versuche haben gezeigt, dass Zusätze in Form von grösseren Schnitzeln die Dichte weiter herabsetzen und eine Zugabe von Schnitzeln mit einer grössten Länge von über 30 mm zu üblichen kohlenstoffhaltigen Massen zu unzulänglichen Dichten führt.

Ferner wurde festgestellt, dass eine Schnitzelzudosierung zur herkömmlichen kohlenstoffhaltigen Masse in einem Knetaggregat mit Hilfe einer Gericke-Schraube nur mit Schnitzeln bis zu dieser letztgenannten Länge problemlos möglich ist. Grössere Schnitzel liessen ein homogenes Mischen der Masse und rissfreies Verpressen derselbe zu Anodenkörpern nicht mehr zu.

## Tabelle 1

Abfall: Kunststoff-Aluminium-Kunststoff-Verbundmaterial mit
67,46 Gew.% Polyäthylen und 32,54 Gew.% Aluminium
Schnitzellänge 1 bis 5 mm

| Abfallanteil (Gew.%) | 0 | 0,01 | 2 | 4 | 6 |
|---|---|---|---|---|---|
| spez. elektr. Widerstand ($\mu\Omega$m) | 67,2 | 71,2 | 71,9 | 76,0 | 80,1 |
| $CO_2$-Reaktivität: | | | | | |
| Rest (Gew.%) | 90,8 | 91,6 | 93,6 | 95,1 | 96,4 |
| Staub (Gew.%) | 3,2 | 3,0 | 0,8 | 0,4 | 0,4 |
| Dichte (kalziniert) (g/ml) | 1,62 | 1,63 | 1,59 | 1,54 | 1,49 |
| Biegefestigkeit ($10^5$N/m$^2$) | 72,8 | 70,5 | 67,7 | 52,7 | 58,8 |

4

## Tabelle 2

Abfall: Papier-Aluminium-Verbundmaterial mit 51,40 Gew.% Papier und 49,6 Gew.% Aluminium

| Abfallanteil (Gew.%) | 0 | 0,01 | 2 | 4 |
|---|---|---|---|---|
| spez. elektr. Widerstand ($\mu\Omega$m) | 67,2 | 72,9 | 78,2 | 80,0 |
| $CO_2$-Reaktivität: | | | | |
| Rest (Gew.%) | 90,8 | 92,0 | 97,7 | 97,8 |
| Staub (Gew.%) | 3,2 | 2,2 | 0,4 | 0,1 |
| Dichte (kalziniert) (g/ml) | 1,62 | 1,60 | 1,58 | 1,56 |
| Biegefestigkeit ($10^5$N/m$^2$) | 72,8 | 68,4 | 55,4 | 53,0 |

**Patentansprüche**

1. Verfahren zur Aufbereitung von aus mit einer Oberflächenbeschichtung versehenen Metallteilen bestehenden Abfällen durch Zerkleinerung,

   dadurch gekennzeichnet,

   dass die zerkleinerten Teile einer in der elektrochemischen Industrie verwendeten kohlenstoffhaltigen Masse zugeführt werden.

2. Verfahren nach Anspruch 1, dadurch gekennzeichnet, dass die Oberflächenbeschichtung aus kunststoff und/oder Papier besteht.

3. Verfahren nach Anspruch 1 oder 2, dadurch gekennzeichnet, dass das Metall Aluminium oder eine Aluminiumlegierung ist.

4. Verfahren nach Anspruch 1 oder 3, dadurch gekennzeichnet, dass die Metallteile Folien oder Bänder sind.

5. Verfahren nach Anspruch 2 oder 3, dadurch gekennzeichnet, dass die mit einer Oberflächenbeschichtung versehenen Metallteile flächenförmiges Verbundmaterial aus Aluminium und kunststoff und/oder Papier und/oder dessen Verarbeitungsprodukt, insbesondere kunststoff-Aluminium-kunststoff-Verbundfolienmaterial für/von Verpackungen, ist.

6. Verfahren nach einem der Ansprüche 1 bis 5, dadurch gekennzeichnet, dass die zerkleinerten Teile Schnitzel mit der grössten Länge von etwa 1 bis 30 mm, vorzugsweise 1 bis 5 mm, sind.

7. Verfahren nach einem der Ansprüche 3 bis 6, dadurch gekennzeichnet, dass die kohlenstoffhaltige Masse eine Söderbergmasse zur Erzeugung von Aluminium nach dem Söderbergprozess ist.

8. Verfahren nach einem der Ansprüche 3 bis 8, dadurch gekennzeichnet, dass die kohlenstoffhaltige Masse eine Masse zur Herstellung von kathoden- oder Anodenblöcken für die Erzeugung von Aluminium nach dem Hall-Heroult-Prozess ist.

9. Verfahren nach einem der Ansprüche 1 bis 8, dadurch gekennzeichnet, dass die kohlenstoffhaltige Masse bis zu 10 Gew.% zerkleinerte Teile enthält.

10. Verfahren nach Anspruch 9, dadurch gekennzeichnet, dass die kohlenstoffhaltige Masse bis zu 6 Gew.%, vorzugsweise 1 bis 2 Gew.%, zerkleinerte Teile enthält.

11. Anoden- und kathodenblöcke zur Erzeugung von Aluminium nach dem Hall-Heroult-Prozess unter Verwendung einer nach dem Verfahren gemäss eines der Ansprüche 3 bis 10 hergestellten Masse.

12. Söderberganode zur Erzeugung von Aluminium unter Verwendung einer nach dem Verfahren gemäss eines der Ansprüche 3 bis 7,9 und 10 hergestellten Masse.

EP 0 441 739 A1

Europäisches Patentamt

## EUROPÄISCHER RECHERCHENBERICHT

Nummer der Anmeldung

EP 91 81 0035

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 726 892  (P.B. FOULKES) <br> * Insgesamt * | 11,12 | C 22 B    1/00 <br> C 22 B   21/00 <br> C 25 C    3/08 <br> C 25 C    3/12 |
| Y | | 1-10 | |
| Y | AT-A- 378 336  (CHEMIE LINZ) <br> * Seite 2, Zeilen 1-12; Seite 3, Zeilen 36-40; Patentansprüche * | 1-10 | |
| A | DE-A-3 802 670  (M. AKTINAT et al.) <br> * Spalte 2, Zeile 15 - Spalte 3, Zeile 26 * | 1-12 | |
| A | EP-A-0 027 534  (SIGRI ELEKTROGRAPHIT) <br> * Seiten 5,6; Patentansprüche * | 1-12 | |
| A | CA-A- 944 568  (GRAN-AL INDUSTRIES) <br> * Seiten 1-3; Seite 9, Zeilen 9-11 * | 1-6 | |
| A | US-A-4 784 733  (E.R. CUTSHALL) <br> * Spalte 1, Zeilen 24-34; Anspruch 1 * | 1,7,12 | |
| A | FR-A-2 510 428  (SCAL) | | |

RECHERCHIERTE SACHGEBIETE (Int. Cl.5)

C 22 B
C 25 C

Der vorliegende Recherchenbericht wurde für alle Patentansprüche erstellt

| Recherchenort | Abschlußdatum der Recherche | Prüfer |
|---|---|---|
| DEN HAAG | 19-02-1991 | BOMBEKE M.J.P. |